Europäisches Patentamt

European Patent Office

Office européen des brevets

(11) Publication number : **0 475 782 A1**

# EUROPEAN PATENT APPLICATION

(21) Application number : **91308400.0**

(22) Date of filing : **13.09.91**

(51) Int. Cl.⁵ : **B29C 65/08, // B29L29/00**

(30) Priority : **14.09.90 US 583260**

(43) Date of publication of application :
**18.03.92 Bulletin 92/12**

(84) Designated Contracting States :
**DE GB NL**

(71) Applicant : **XEROX CORPORATION**
**Xerox Square**
**Rochester New York 14644 (US)**

(72) Inventor : **Thomsen, Karl V.**
**2116 Kenyon Road**
**Ontario, New York 14519 (US)**
Inventor : **Langlois, Edouard E.**
**2631 Oakview Drive**
**Rochester, New York 14617 (US)**
Inventor : **Darcy, John J.**
**347 Brooksboro Drive**
**Webster, New York 14580 (US)**

(74) Representative : **Hill, Cecilia Ann et al**
**Rank Xerox Patent Department Albion House,**
**55 New Oxford Street**
**London WC1A 1BS (GB)**

(54) **Ultrasonic welding of thermoplastic belts.**

(57) A process is described for welding sheet material (12) comprising a thermoplastic polymer. The process comprises overlapping edges (20, 22) of the sheet material to form a lap joint, supporting the lap joint on an anvil (14), and welding the lap joint by contacting and traversing the lap joint with an ultrasonic welding horn (18). The welding horn is oscillated at a frequency of between about 30 kHz and about 45 kHz while contacting and traversing the lap joint with the welding horn. The welding horn is preferably highly thermally conductive.

EP 0 475 782 A1

**FIG. 2**

This invention relates in general to a process for welding flexible webs and more specifically to a process for welding webs using high frequency welding techniques.

Various techniques have been devised to form belts from webs. Thermoplastic webs may be joined by overlapping the edge of one web over another and placing the overlapped or seam portion of the webs over a base beneath a vibrating welding element. The vibrating welding element may be a horn vibrating at an ultrasonic frequency while it is brought into forced contact with one side of the overlapped webs while the other side of the overlapped web seam is supported on an anvil surface. Transfer of vibratory energy from the horn to the web material is effected upon impact of a suitably shaped surface of the horn on the seam of the web material. The vibrating energy causes surface heat to be generated between the overlapping webs along the area of contiguous contact between the webs. The horn normally resonates toward and away from the seam at a frequency of about 16 kHz or higher, e.g. 20 kHz. A typical welding horn amplitude at a frequency of about 20 kHz is about 80 micrometers and a typical welding horn traverse rate is between about 4 centimeters per second and about 7 centimeters per second. Thus, for example, a traverse speed of about 5 centimeters per second is described in US-A 4,838,964. The weld may be in the form of a chain of spots along the seam or a continuous weld. The technique of ultrasonic welding of thermoplastic material is well known and illustrated, for example, in US-A 4,532,166, US-A 4,838,964, US-A 3,879,256, US-A 3,939,033, US-A 3,947,307 and US-A 3,459,610, all of these patents being incorporated by reference herein in their entirety.

Acceptable welds for forming belt shaped electrophotographic imaging members have been obtained which perform satisfactorily when transported around relatively large diameter rollers. The welded seams of these belts contain a deposit of web material melted during welding. These deposits or "weld splashes" are formed on each side of the welded web adjacent to and adhering to each end of the original web and to the regions of the web underlying each splash. Unfortunately, when the belts are transported around very small diameter rollers having, for example a diameter of about 19 mm, the weld splash on the outer surface of the belt gradually separates from the upper end of the photoreceptor web during cycling to form an open crevasse or crack which is repeatedly struck by the cleaning blade during image cycling to cause the weld splash on the outer surface of the belt to also separate from the underlying web so that it is held to the belt at a small linear region located along the length of the splash on the side of the splash opposite the upper end of the photoreceptor web this small linear region located along the length of the splash on the side of the splash opposite the upper end of the photoreceptor web functions as a hinge that allows the weld splash to pivot or flop away from the upper end of the photoreceptor web and from the underlying web so that carrier beads and toner particles collected in the space between the web and splash are periodically ejected when the splash flops open and closed when the seam passes the cleaning blade and also when it travels around small diameter rollers. The ejected material is carried to various subassemblies (e.g. corotrons, lamps) and causes them to fail and ultimately cause copy defects. Collisions of the blade with the flopping splash results in the blade becoming chipped and pitted. These chips and pits in the blade leave streaks of toner on the photoreceptor surface which eventually appear as streaks on copies made during subsequent electrophotographic imaging cycles and adversely affect image quality.

The following prior art has been noted:

US-A Reissue 33,063 reissued to Obeda on September 19, 1989 - Apparatus and method are disclosed for welding two sheets of thermoplastic materials. A tapered horn having a serrated or knurled tip is vibrated at typically 40 KHz along the longitudinal axis of the horn in a direction transverse to the axis of a nip between a pair of rollers. The linear rate of sheet movement past each side of the horn tip should be between 3 to 4 feet per minute but depends on the thickness of the sheets. The speed should be relative to the amount of heat produced by the tip to provide a proper weld. The born melts the facing surfaces of the two sheet and the rollers press and weld the sheets together.

US-A 4,532,166 issued to Thomsen et al on July 30, 1985 - A welded web is disclosed in which a first edge overlaps a second edge of a web, the first edge having at least one aperture which is at least partially filled with thermoplastic material from the second edge. Ultrasonic welding frequencies of 16 kHz or higher, e.g. 20 kHz, are disclosed. The welding horn is disclosed as traversing the seam at about 5 cm per second.

US-A 4,838,964 issued to Thomsen et al. on June 13, 1989 - A process is disclosed for fabricating belts by overlapping the edges of the belt to form a loop, transferring the loop to an anvil of a welding station and welding the belt. Ultrasonic welding frequencies of 16 kHz or higher, e.g. 20 kHz, are disclosed. The welding horn is disclosed as traversing the seam at about 5 cm per second.

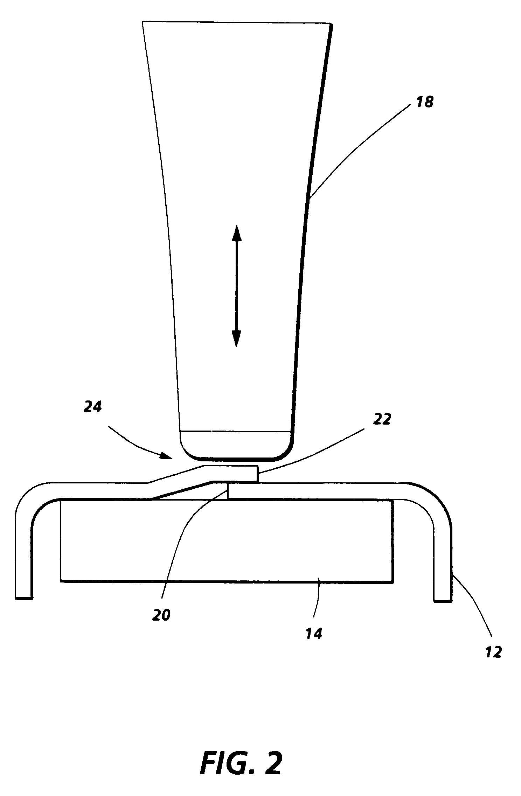

US-A 3,717,539 issued to Roberts on February 20, 1973 - Ultrasonic welding apparatus and method are disclosed for welding moving sheets of plastic. The rate of travel of the plastic sheets is typically one-half inch per second and ultrasonic vibration is set at 20,000 cycles per second. A cooling means is included for quenching the workpieces while being compressed to improve the weld. See, for example, Fig 2.

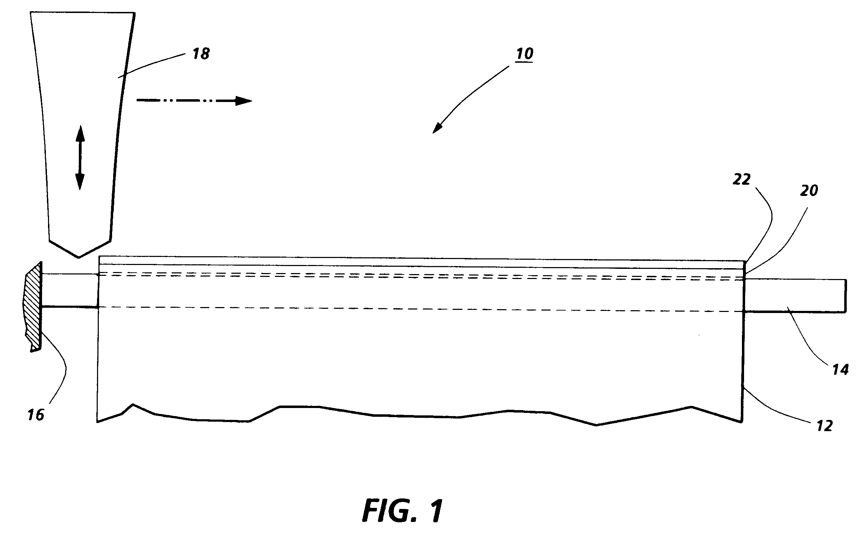

US-A 4,496,095 issued to Renshaw et al. on January 29, 1985 - A method of progressively ultrasonically welding together metallic workpieces is disclosed utilizing an ultrasonic welding apparatus having a welding tip and complimentary anvil between which pieces are inserted. The workpieces are clamped, presqueezed and initial pressure and energy are introduced to scrub the workpieces. Then pressure and energy are synchronously ramped in phase to maximum levels to effect a spot weld on the workpiece while it is stationary. The spot weld is controlled automatically. See, for example, Fig. 1 showing the apparatus and Fig. 2 showing a graph of the power and timing cycle.

US-A 3,678,566 issued to Ellis et al. on July 25, 1972 - A friction welding process is disclosed in which the rate of axial shortening of a metallic workpiece due to burn-off during rotation is measured and this rate is used as a guide to determine the quality of a weld. Deviations are used to adjust the axial pressure to reduce the deviation, or as an alternative, the speed and relative rotation may be adjusted.

US-A 3,610,506 issued to Robinson on October 5, 1971 - A method is disclosed for ultrasonic welding of metals using a variable welding force. Force is applied to a stationary work by stationary welding apparatus at the start of a welding period, but the force applied rises more slowly than normal. See, for example, Figs 1 and 2.

When ultrasonic welding techniques are utilized to to fabricate belts having welded seams, particularly photoreceptors in electrostatographic copiers, duplicators, printers and the like that are transported over small diameter rollers, copy quality can deteriorate when blade cleaning is used during image cycling. Thus, the characteristics of belt welding systems exhibit deficiencies in the manufacture of belts that must meet extended life requirements.

It is an object of this invention to provide a welding process which enables above-noted disadvantages to be overcome.

The present invention provides a process for welding comprising providing sheet material comprising a thermoplastic polymer, overlapping edges of the sheet material to form a lap joint, supporting the lap joint on an anvil, welding the lap joint by contacting and traversing the lap joint with an ultrasonic welding horn, and oscillating the welding horn at a frequency of between about 30 kHz and about 45 kHz while contacting and traversing the lap joint with the welding horn. The welding horn is preferably highly thermally conductive.

By way of example only embodiments of the invention will be described with reference to the accompanying drawings wherein:

FIG. 1 is a schematic view in elevation of welding means for welding belts on an anvil.

FIG. 2 is a schematic end view in elevation of welding means for welding belts on an anvil.

FIG. 3 is a schematic view in elevation of a welding means for welding belts on an anvil.

FIG. 4 is a schematic clan view of a welding means for welding belts on an anvil.

FIG 5 is a schematic view in elevation, partly in section, of a welding means for welding means for welding belts on an anvil.

FIG. 6A is a schematic view of a welding horn for welding belts on an anvil.

FIG. 6B is a schematic view of a welding horn for welding belts on an anvil, viewed at an angle 90° to the view illustrated in FIG. 6A.

FIG. 7 is a schematic, sectional view in elevation, partly in section, of the welded joint of a prior art flexible photoreceptor.

FIG. 8 is a schematic, sectional view in elevation, partly in section, of the welded joint of a prior art flexible photoreceptor after it has been repeatedly cycled.

Referring to FIG. 1, a welding station 10 for fabricating belts from a web 12 is shown. Welding station 10 comprises an anvil 14 cantilevered from a support means 16. Anvil 14 supports thermoplastic web 12 during welding of the web by ultrasonic welding horn 18. The segments of web 12 supported by anvil 14 comprise overlapping opposite edges 20 and 22 of web 12. Thus, the direction of reciprocation of horn 18 is perpendicular to the plane of the segments of web 12 supported by anvil 14. Welding horn 18 reciprocates vertically as indicated by the vertical arrow. During welding of the overlapping opposite edges 20 and 22 of web 12 by welding horn 18, welding horn 18 moves horizontally in the direction indicated by the horizontal arrow.

As shown in FIG. 2, web 12, such as a thin coated or uncoated thermoplastic web, is supported by anvil 14. More specifically, anvil 14 supports a lap joint 24 formed from overlapping opposite edges 20 and 22 of web 12. Lap joint 24 is welded by contacting lap joint 24 with ultrasonic welding horn 18.

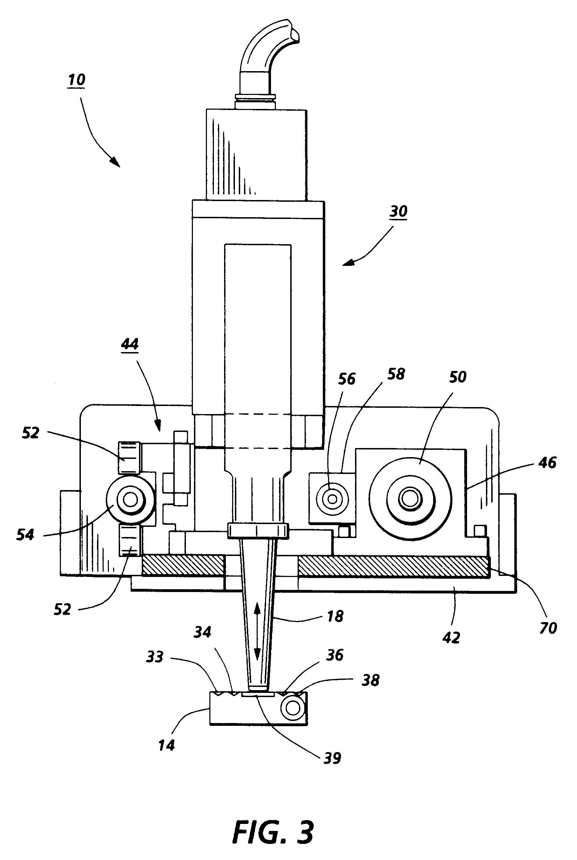

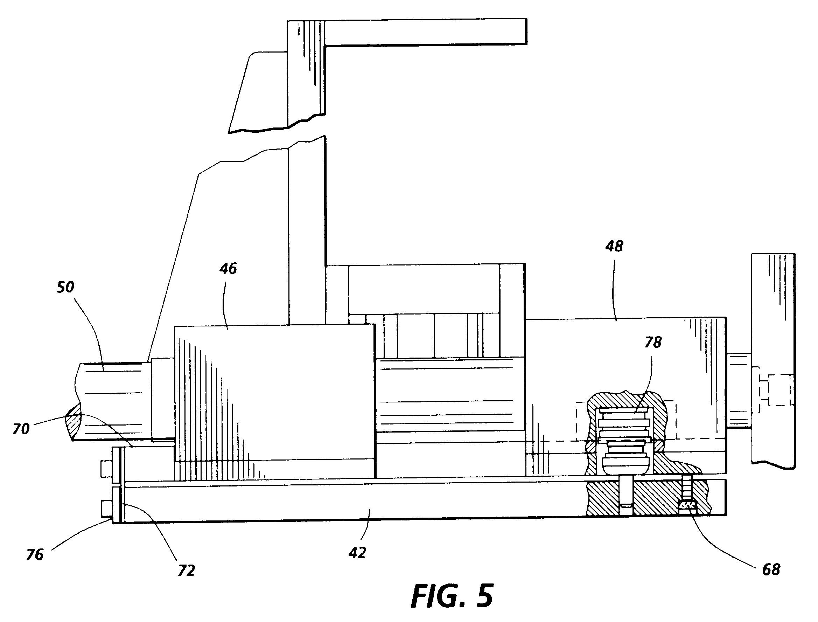

Referring to Figs. 3, 4, 5 and 6, an ultrasonic belt welding station 10 comprising an ultrasonic welding horn 18 and transducer assembly 30, also referred to as a sonotrode, is illustrated. A solenoid 32 is mounted on the upper hinge half 70 to extend or retract ultrasonic welding horn 18 and transducer assembly 30 in a vertical direction. The web lap joint 24 (shown in FIG. 2) formed by the overlapping segment ends of thermoplastic web 12 is supported by the upper surface of anvil 14 and held in place below the path of ultrasonic horn and transducer assembly 30 by suction from parallel rows of grooves 33, 34, 36 and 38 in the upper surface of anvil 14 (shown in FIG 3), the grooves leading to vacuum plenums (not shown) within the interior of anvil 14. The ultrasonic horn and transducer assembly 30 is supported by assembly 65 comprising two collar clamps mounted to a vertical support mounted to the upper hinged half 70 of a substantially horizontally reciprocateable carriage 44. One side of of the lower hinged half 42 of carriage 44 is suspended from pillow blocks 46 and 48 which in turn slide on horizontal bar 50. The other side of carriage 44 is suspended from a pair of cam followers 52 that roll on the outer surface of horizontal bar 54. A rotatable lead screw 56 drives horizontally reciprocateable carriage 44 through ball screw 58 secured to carriage 44. Horizontal bars 50 and 54 as well as lead screw 56 are supported at each end by flanges 60 and 62 which are secured to a suitable support frame (not shown). Lead screw 56 is rotated by a belt 64 driven by electric motor 66 which is also supported by a suitable support frame (not shown). Adjustable set screw 68 is positioned to extend upwardly from the lower hinged half 42 of carriage 44 to assist in maintaining a predetermined spacing between the bottom of the ultrasonic horn of horn and transducer assembly 30 and the top of anvil 14 and to ensure application of a uniform pressure on the web lap joint as the bottom of the ultrasonic horn 18 traverses the lap joint 24 (see FIGS. 1 and 2). The end of set screw 68 rests against the bottom of upper hinged half 70 of carriage 44. The upper hinged half 70 and lower hinged half 42 of carriage 44 are joined by a hinge comprising a thin metal shim 72 fastened to upper hinged half 70 by bolted plate 74 and fastened to lower hinged half 42 by bolted plate 76. The hinge allows upper hinged half 70 of carriage 44 and ultrasonic horn of horn and transducer assembly 30 to pivot along the hinge during welding to compensate in a substantially vertical direction for any irregularities encountered along the lap joint 24 (see FIGS. 1 and 2) during welding. An air bellows 78 is positioned between upper hinged half 70 and lower hinged half 42 of carriage 44 to adjust the pressure of the bottom of the ultrasonic horn 18 against the web lap joint 24 (see FIGS. 1 and 2), e.g. to function as a counterbalance.

In operation, ultrasonic horn 18 and transducer assembly 30 are in a retracted position because solenoid 32 is activated. Lap joint 24 of overlapping opposite edges 20 and 22 of web 12 (see FIGS. 1 and 2) carried on the upper surface of anvil 14 is securely positioned under the horizontal path to be taken by ultrasonic horn 18. Vacuum is applied to grooves 33, 34, 36 and 38 in the upper surface of anvil 14 hold the overlapping opposite edges 20 and 22 of web 12 in place during welding. The length of grooves 33, 34, 36 and 38 is normally slightly shorter than the width of web 12. Any suitable vacuum aperture, such as grooves or holes, may be utilized. Vacuum plenums (not shown) below the grooves 33, 34, 36 and 38 are connected by passages (not shown) to suitable fittings and hoses through control valves (not shown) to a vacuum source. Activation and inactivation of the vacuum plenums can be independently accomplished by any suitable programmable controller to control conventional valves to connect the vacuum plenums by suitable hoses (not shown) to a source of vacuum or to vent the vacuum plenums to the atmosphere. A hard metal strip insert 39 can be utilized in the anvil along the welding path of the welding horn 18 anvil. Strip insert 39 may comprising any suitable material such as stainless steel, A4 tool steel , 02 steel, and the like, which can withstand abrasive conditions such as those encountered during belt lap joint welding.

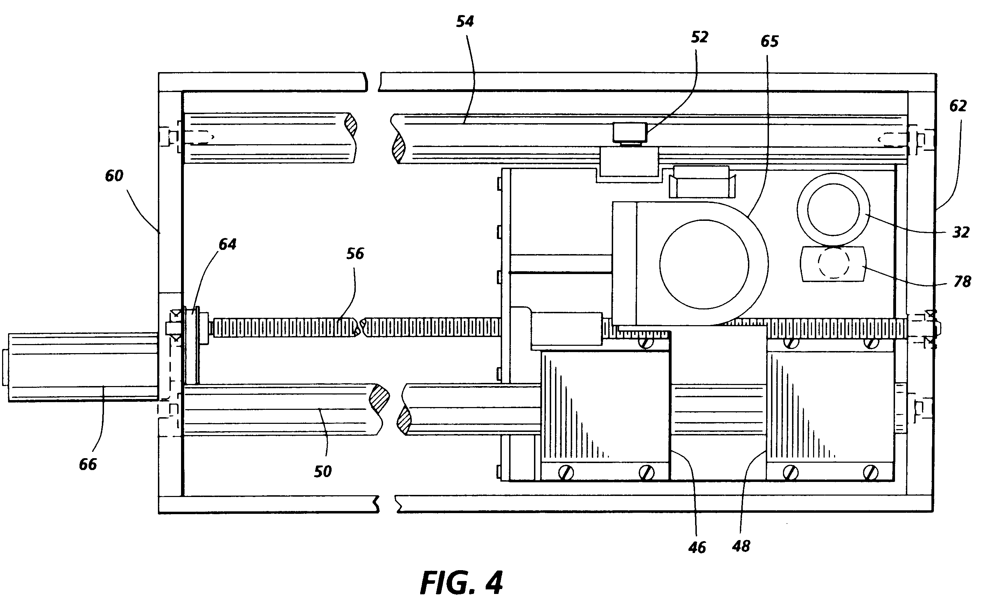

Solenoid 32 is inactivated to extend the transducer in ultrasonic horn and transducer assembly 30 toward anvil 14 and adjacent to but not in contact with one end of lap joint 24. Because it is difficult to lower the horn 18 precisely on the extreme edge of the lap joint 24 every time for each fresh web, it is preferred that the horn be lowered adjacent to the edge of the lap joint 24 and then be moved slowly onto the lap joint 24. If desired, horn 18 may be held stationary and lap joint 24 (as well as anvil 14) may be moved relative to horn 18 or both horn 18 and lap joint 24 may be moved relative to each other to effect traversal of horn 18 along lap joint 24. Movement of anvil 14 may be effected by any suitable reciprocatable and conventional means. The transducer in ultrasonic horn and transducer assembly 30 is activated and electric motor 66 (see Fig. 4) is activated to drive lead screw 56 at a predetermined speed which in turn moves horizontally reciprocateable carriage 44. Movement of horizontally reciprocateable carriage 44 carries ultrasonic horn 18 into compressive engagement with lap joint 24. The reciprocateable carriage 44 and horn 18 are moved at a predetermined traverse rate along the lap joint to form a welded seam. A reduced initial contact speed or traverse rate can minimize the formation of a raised ridge in the welded seam from one belt to another.

The welding surface of the ultrasonic horn 18 may be of any suitable shape such as the flat or curved cross-sectional shapes illustrated, for example, in US-A 3,459,610 and US-A 4,532,166. The high vibration frequency of the ultrasonic horn 18 along the its vertical axis causes the temperature of at least the contiguous overlapping surfaces of thermoplastic web 12 to increase until at least the thermoplastic material in the overlapping opposite edges 20 and 22 flows. Welding of the contiguous overlapping surfaces of thermoplastic web 12 occurs because the thermoplastic material flows as a result of the applied energy of ultrasonic oscillations. The thermoplastic material that is induced to melt and weld the lap joint 24 may be provided solely by a coating on the web, from both a coating and a web substrate, or solely from the web itself. Web 12 may be of any suitable thickness which will allow adequate heating of the contiguous overlapping surfaces of the web edges by the applied ultrasonic energy to cause the thermoplastic material to melt and weld the overlapping edges of web 12 at lap joint 24. It is believed that the rapid impaction of one edge of web 12 with the other edge of web 12 at the contiguous overlapping web surfaces between the anvil 14 and ultrasonic horn 18 causes generation of heat which maximizes melting of the thermoplastic material. If desired, the horn 18 may comprise any suitable highly thermoconductive material such as aluminum to ensure achievement of higher temperatures at the interface between the overlapping edges of web 12, to minimize thermal distortion of the exposed surfaces of the web 12, and to remove the heat, generated by the horn, from the thermoplastic material before the tip pressure exerted by horn 18 is removed from the welded seam. This helps prevent the material from boiling and producing a ridge at the seam.

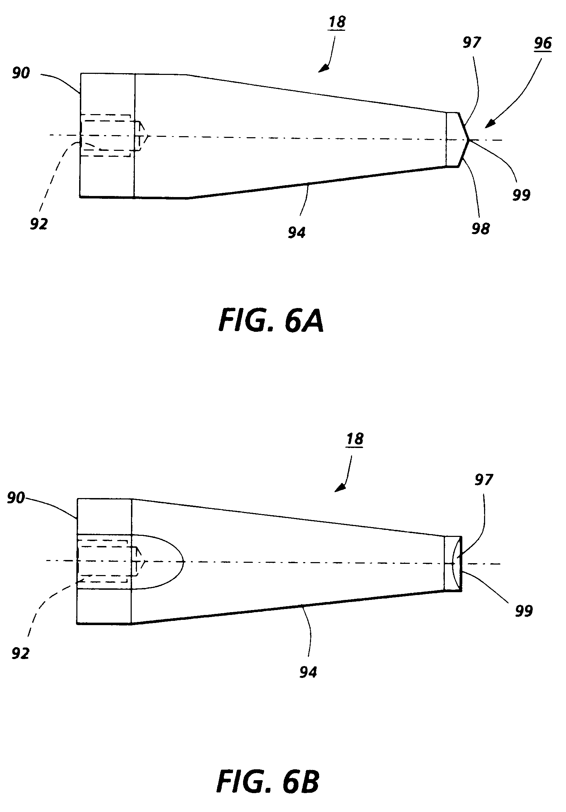

In FIGS. 6A and 6B a preferred welding horn 18 is shown comprising an upper end 90 which has a threaded recess 92 for receiving a threaded stud (not shown) extending from the transducer of the ultrasonic horn and transducer assembly 30 (see FIG. 3). Horn 18 is generally cone shaped with a tapered side 94 that terminates at welding tip 96. Welding tip 96 has a "chisel " shape with inclined flat faces 97 and 98 that join at an apex or point 99. If desired, the faces 97 and 98 may be of different sizes so that the apex 99 is offset from the axis of horn 18. Although the end of the welding horn 18 may be of any suitable shape, the shallow chisel profile shown in FIGS. 6A and 6B is a preferred shape. The apex 99 is preferably flattened (not shown) by any suitable technique, such as by sanding with 600 grit dry sandpaper or crocus cloth, to form a flat surface with a width, for example, of about 0.4 millimeter to about 1 millimeter. The shallow chisel shape and flattened end extends the horn mass closer to the lap joint during welding to enhance absorption of heat and to minimize heat buildup. However, other suitable shapes and sizes well known in the welding art may also be utilized.

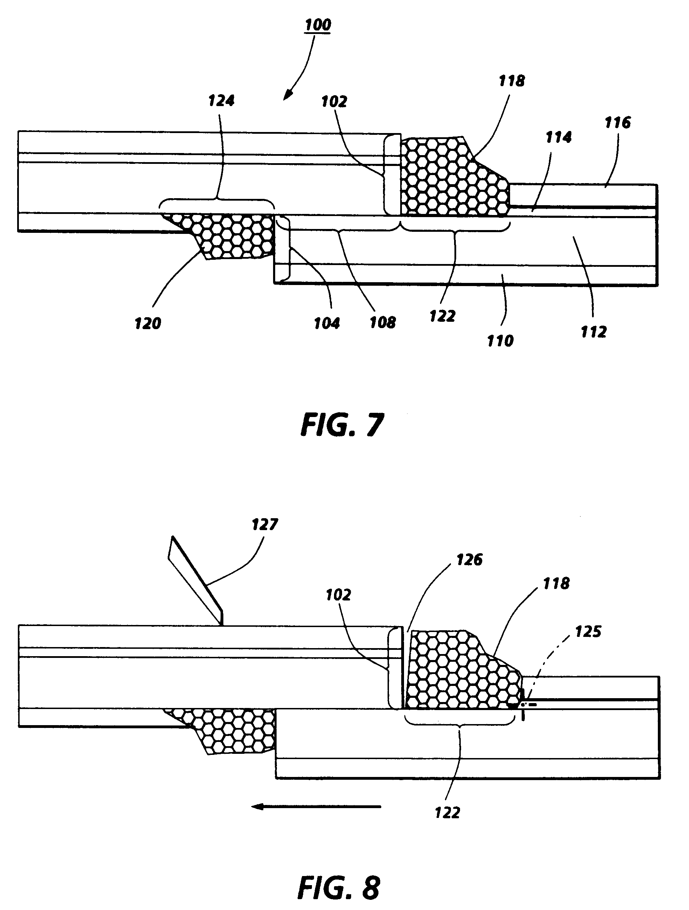

Referring to FIG. 7 a cross section of a conventional prior art welded belt photoreceptor 100 is schematically illustrated. The ends 102 and 104 of a photoreceptor web employed to form belt photoreceptor 100 overlap to form a lap interface 108. The photoreceptor web comprises an anticurl layer 110, a flexible substrate layer 112, a charge generating layer 114 and a charge transport layer 116. Generally, the anticurl layer 110, flexible substrate layer 112 and charge transport layer 116 comprise solid thermoplastic film forming polymers. After completion of welding of prior art belt photoreceptors at a frequency of about 20 kHz, a deposit of web material melted during welding forms weld splashes 118 and 120 on each side of web 106 adjacent to and adhering to each end 102 and 104 and to the regions 122 and 124 of the web 106 underlying each splash 118 and 120, respectively.

As shown in FIG. 8, upon extended cycling of belt photoreceptor 100 around very small diameter rollers to form electrophotographic images on charge transport layer 116, the weld splash 118 on the outer surface of the belt photoreceptor 100 gradually separates from the upper end 102 of the web during cycling to form an open crevasse or crack 126 which is repeatedly struck by the cleaning blade 127 during image cycling to cause the weld splash 118 on the outer surface of the belt photoreceptor 100 to also separate from the region 122 of the underlying web so that it is held to the belt at a small linear region 125 located along the length of the splash on the side of weld splash 118 opposite the upper end 102 of the photoreceptor web 100. This small linear region 125 located along the length of the splash 118 on the side of the splash opposite the upper end 102 of the photoreceptor web 100 functions as a hinge that allows the weld splash 118 to pivot or flop away from the upper end 102 of the photoreceptor web 100 and from the underlying web so that carrier beads and toner particles collected in the space between the web and splash are periodically ejected when the splash flops open and closed as the seam passes the cleaning blade 127 and when it travels around small diameter rollers. The ejected material is carried to various subassemblies (e.g. corotrons, lamps) and causes them to fail and ultimately cause copy defects. Collisions of the blade 127 with the flopping splash 118 results in the blade 127 becoming chipped and pitted. These chips and pits in the blade leave streaks of toner on the photoreceptor web surface which eventually appear as streaks on copies made during subsequent electrophotographic imaging cycles and adversely affect image quality.

For satisfactory results, the horn vibration frequencies should be between about 30 kHz and about 45 kHz during the entire contact welding pass over the lap joint to ensure that the thermoplastic material is sufficiently softened and to prevent the formation of splashes that partially separate from the web and flop back and forth during cycle. Preferably, for stronger welds and greater adhesion of the weld splash to the web, the horn vibration frequencies should be constant at a frequency between about 38 kHz and about 42 kHz during the entire contact welding pass over the lap joint. A typical horn suitable for joining thin thermoplastic webs utilizes a sonic generator of about 400-800 watt capacity, an operational frequency of about 40 kHz, and a flat input horn welding surface about 12 millimeters long and about 0.4 to about 1 millimeter wide at the bottom of a generally chisel shaped profile. A typical reciprocal motion amplitude for this horn is between about 60 micrometers and about 75 micrometers. The combined weight of between about 4.5 kilograms and about 5 kilograms for the solenoid 32, ultrasonic horn and transducer assembly 30, and upper hinged half 70 of carriage 44 is sufficient to bring the horn 18 into forced contact with the lap joint 24. However, air bellows, a spring bias, weights, counterweights, or other suitable means may be utilized to increase or decrease the contact force. Since heat is generated very rapidly at the interface of the overlapping web ends at the lap joint with this type of device, sufficient heat to cause the thermoplastic materials to melt can occur typically in about 0.01 second and about 0.25 second as the horn traverses the along lap joint 24. For example, at a relatively high traverse rate of about 70 mm/sec, and a horn tip width of 0.7 mm, the horn tip is typically in contact with a particular point of the lap joint for about .01 second. These conditions are typical for thermoplastic photoreceptor web material having a thickness of between about 100 micrometers and about 150 micrometers. However, thicker web materials would require additional dwell time to ensure satisfactory welds. Similarly, thinner web materials would require less dwell time to ensure satisfactory welds.

As the horn 18 is lowered to the lap joint of web 24, electrical power is supplied to the transducer in the ultrasonic horn and transducer assembly 30 and electric motor 66 is activated to initially drive lead screw 56 at the predetermined first speed or rate which in turn moves horizontally reciprocateable carriage 44 and ultrasonic welding horn 18 along the lap joint of web 24. After carriage 44 completes its traversal of the lap joint, solenoid 32 is activated to retract the transducer in ultrasonic horn and transducer assembly 30 away from anvil 14, the transducer in ultrasonic horn and transducer assembly 30 is inactivated and solenoid 32 is inactivated and electric motor 66 is reversed to return horizontally reciprocateable carriage 44 to its starting position.

Satisfactory welding results may be achieved when the predetermined horn traverse speed is between about 30 millimeters per second and about 70 millimeters per second. Preferably, the welding horn is transported at a rate of between about 45 millimeters per second and about 60 millimeters per second. Optimum results are achieved with a welding speed of between about 50 millimeters per second and about 55 millimeters per second. When the horn traverses the seam at greater than about 70 mm/sec, the thermoplastic layers tend to not join because insufficient energy is transmitted the material and the material does not reach a temperature sufficient to allow the layers to join properly. When the traverse speed is less than about 30 mm/sec the dwell time is too long and the thermoplastic material is melted and then pushed out from under the horn causing the seam to be too weak and to be too wide. The horn traverse speed is held constant during the traverse if the thickness of the lap joint is uniform. However, the speed at any point during the weld cycle may be increased or decreased to control the amount of energy being applied or to change the characteristics of the weld itself. For example, the speed can be changed within the limits described herein to accommodate variations in the thickness of the lap joint material along the length of the lap joint. The use of a lower initial traverse rate will reduce the likelihood of the horn catching the upper layer of the lap joint upon initial horn contact thereby minimizing ridge formation on the welded belt seam.

Transport of the horn over the lap joint may be effected by any suitable means. A typical transport means is shown in the FIGS. 3, 4 and 5. Instead of a worm gear drive system, other suitable and well known means may be utilized such as a belt and pulley system, a linear motor, a servo controlled motor, and the like. If desired, the welding means may be stationary and the lap joint may be moved or, alternatively, both the welding means and lap joint may simultaneously be moved relative to the other to achieve traversal of the horn along the lap joint. The speed of horn traverse over the lap joint may be changed by any suitable means. Typical speed control means include variable speed drives controlled with potentiometers, steppermotors controlled by a closed loop or open loop system, servo-motors controlled by a closed or open loop system, and the like. The speed of the variable speed motors can also be controlled by any conventional and suitable programmable controller. Electrical power to drive electrical equipment such as the motors are supplied through suitable wiring and conventional suitable electrical switching. The switches and potentiometers can be actuated through suitable circuitry in response to a signal from the programmable controller. Thus, for example, the control functions in the process of this invention can be synchronized and integrated with a suitable programmable controller such as a Allen Bradley Programmable Controller, Model No. 2/05 or Model No. 2/17. The programmable controller responds to various typical inputs including, for example, inputs from limit switches, timers, encoders, proximity sensors, counters and the like and utilizes these inputs for sequencing program outputs to activate electric switches, and the like. Termination of an activated component may be effected by any suitable and conventional means such as by the programmable controller or by suitable limit switches.

Any suitable highly thermally conductive welding horn material may be utilized. Preferably, the horn comprises aluminum because of its superior thermal conductivity and heatsink capabilities. Optimum results are achieved with an aluminum alloy. Particularly preferred is 7075T6 aluminum alloy because of its heat conductivity, hardness and resistance to wear. 7075T6 aluminum alloy is a standard alloy developed for aircraft components. Other highly thermally conductive welding horn materials include, for example, titanium. Generally, the horn preferably should comprise material having a thermal conductivity which facilitate absorption of heat and minimizes heat buildup. The size and mass of the horn should be sufficient to avoid feedback and overload of the power supply employed. The end of the welding horn may be of any suitable shape. A preferred shape is a shallow chisel profile in which two flat surfaces meet at an apex, the angle between the plane of each surface forming an acute angle of between about 10 degrees and about 30 degrees with an imaginary plane perpendicular to the vertical axis of the horn and intersecting the axis at the point where the apex also intersects the axis. This inclined surface functions as a ramp on which the horn rides up onto the lap joint. The apex is preferably flattened by a suitable technique, such as by sanding with 600 grit dry sandpaper or crocus cloth, to form a flat surface with a width, for example, of about 0.4 millimeter to about 1 millimeter. The shallow chisel shape and flattened end extends the horn mass closer to the lap joint during welding to enhance absorption of heat and to minimize heat buildup. However, other suitable shapes and sizes well known in the welding art may also be utilized. For example, the end of the welding horn or the welding surface may be in the form of a flat surface having the shape of a round dot having a diameter of about 4 millimeters. Preferably, the apex length is greater than the length of seam overlap and width of the splash to compensate for any for error in placing the seam under the horn. A typical apex length is about 30 percent greater than the length of seam overlap.

Generally, the anvil underlying the overlapped seam during welding is a rigid surface which can withstand the rigors of the welding process. Typical anvil surfaces include metals such as stainless steel, A4 tool steel, O2 steel, and the like. For embodiments where the anvil moves during welding to provide relative motion between a moving or stationary welding horn, such movement may be accomplished by any suitable means such as a lead screw and ball arrangement, belt and pulley drive, and the like.

The distance from the bottom of the horn at the midpoint of each vertical stroke relative to the surface of the anvil during welding of the lap joint is dependent upon the thickness of the thermoplastic material. Generally, the bottom of the horn at the midpoint of each vertical stroke relative to the surface of the anvil during welding of the lap joint should be at a distance between about 10 and about 75 percent of the thickness of the lap joint being welded. Preferably the distance is between about 35 percent and about 70 percent of the thickness of the lap joint being welded. Optimum welded seam integrity and smoothness is achieved with a distance of between about 45 percent and about 55 percent of the thickness of the lap joint being welded. If the distance between the horn and the anvil is greater than 75 percent of the lap joint being welded there will not be enough pressure on the seam to form the bond between the two layers and a weak weld will be obtained. If the distance is less than 10 percent of the thickness of the lap joint the horn will try to lift the top layer of the overlapped material and not start the weld correctly and it is also more likely that the horn will hit the anvil when it begins its vibratory motion and damage the horn. The length of each horn stroke may be of any suitable length. Typical stroke lengths range from about 50 micrometers to about 150 micrometers. Preferably, the stroke length selected should not be so long that the horn strikes the anvil surface. even if the horn initially contacts the anvil prior to riding up on the lap joint, once the horn tip is on the lap joint, the lap joint will support the weight of the welding fixture and increase the distance between the horn tip and the anvil.

Any suitable seam overlap may be utilized. A preferred range of overlap is between about 0.7 millimeter and about 1.7 millimeters.

Any suitable thin, flexible web comprising a thermoplastic layer may be usedfor the web 12. The web may comprise a single layer or a plurality of layers in which at least one of the layers comprises thermoplastic material. Any suitable thermoplastic, polymeric material which will melt at the temperatures generated at the contiguous overlapping web surfaces of the seam may be utilized. Typical thermoplastic, polymeric materials include polyethylenes, polypropylenes, polycarbonates, polyvinylacetate, terephthalic acid resins, polyvinylchloride, styrenebutadiene copolymers and the like. The thermoplastic material that is induced to melt and weld the seam may be provided solely by a thermoplastic coating on the web, from both a coating and a web substrate, or solely from the web itself. Thus, for example, a nonthermoplastic web substrate may be coated with a thermoplastic material which is the sole source of the material which melts. Alternatively, for example, the web may be uncoated and consist entirely of the thermoplastic material, some of which melts to weld the seam. The web may be of any suitable thickness which will allow adequate heating of the contiguous overlapping surfaces of the web edges to permit sufficient heat energy to be applied at the contiguous overlapping surfaces to cause the thermoplastic material to melt and weld the overlapping edges of web at the seam. Preferred web thicknesses for use with ultrasonic welding can range from between about 25 micrometers to about 500 micrometers. Thicker webs may be utilized as long as sufficient heat is applied to the contiguous overlapping surfaces of the web to cause the thermoplastic material to melt. Webs having a thickness up to about 10 millimeters may be joined with the process and apparatus described above with reference to the drawings. A preferred flexible web comprises an anticurl layer, a substrate layer, an optional charge blocking layer, an optional adhesive layer, a charge generating layer and a charge transport layer. These flexible multilayered electrophotographic imaging members are well known in the art and described, for example, in US-A 4,654,284 and US-A 4,786,570. The web containing the aperture may be thermoplastic or non-thermoplastic. The described technique may be utilized to join dissimilar or similar materials. Although the fabrication of a flexible belt is a preferred application, the process may be utilized to join multiple sheets or webs. Thus, the word "sheet" is intended to encompass webs, sheets, straps, and the like. The webs may be of any suitable shape and may be separate "webs or a single web. The opposite edges of a single web may be joined to form, for example, a continuous loop, belt or mobius strip.

The formation of creases in photoreceptor belts during passage around very small diameter rollers can be greatly minimized by welding the seams at the very high horn oscillation frequencies in accordance with the invention and described above. Further, crack formation during extended cycling is reduced. Also, the described process in accordance with this invention extends the useful life of welding horns thereby reducing the frequency of fabrication line down time.

A number of examples are set forth hereinbelow and are illustrative of different compositions and conditions that can be utilized in processes in accordance with the invention. All proportions are by weight unless otherwise indicated. It will be apparent, however, that the processes can be practiced with many types of compositions and can have many different uses in accordance with the disclosure above and as pointed out hereinafter.

EXAMPLE I

A web of polyester film (Mylar, available from E. I. duPont de Nemours and Co.) having a width of about 33.5 cm, a length of about 59 cm and a thickness of about 76 micrometers and having a first coating on one side of a polyester having a thickness of about 0.2 micrometer and a second coating comprising polyvinyl carbazole about 3 micrometers thick was coated on both sides with a layer comprising polycarbonate resin, each polycarbonate coating having a thickness of about 25 micrometers. This web was processed in an apparatus similar to the apparatus illustrated in the drawings. The leading edge of the web was placed on along the length of the upper surface of an anvil having a width of about 10 cm and a length of about 50 cm and held in place by a vacuum applied to apertures in the anvil underlying the leading edge of the web. The web covered slightly more than half of the upper surface of the anvil. The opposite edge of the web was brought under the anvil and placed on the exposed portion of the upper surface of the mandrel and over part of the leading edge of the web that was previously placed on the mandrel. The opposite edge overlapped the leading edge by about 1.2 mm. The opposite edge was held in place by a vacuum applied to apertures in the anvil underlying the opposite edge of the web. The anvil carrying the newly formed belt loop was then positioned under a reciprocateable ultrasonic welding horn. The ultrasonic welding horn supported in a carriage was lowered against the web lap joint. The horn was biased against the seam due to the controlled weight of about 4.5 kilograms of horn, transducer, bracket and any counterweight pressing against the seam supported by the mandrel. The horn was formed from 7075 T6 aluminum and had a generally chisel shaped input horn welding surface in which the point of the chisel was about 12 millimeters long with a flattened chisel "point" about 0.4 to 1 mm wide. The horn was operated at a frequency of 20 kHz and a motion amplitude of about 76 micrometers and was driven by a Branson 20 Khz 800 watt power supply with amplitude adjustment module, a Branson 00 Khz 2.0:1 booster aluminum 101-149-081 and a Branson 20 Khz converter. The horn was transported by the carriage in a substantially horizontal path along the web lap joint at a constant rate of about 50 millimeters per second. The carriage was driven by a worm gear which was in turn rotated by a belt connected to the shaft of an electric motor. During welding, the horn was allowed to freely move vertically to accommodate variations in the web lap joint thickness. Also, during welding, the welding surface of the horn reciprocated through a distance of about 70 micrometers and the total distance between the welding surface of the reciprocating horn (from the midpoint of the stroke) and the surface of the underlying anvil was about 102 micrometers. This welding procedure caused the thermoplastic materials in the web to uniformly melt and weld the web seam. Upon completion of the welding of the belt lap joint, the ultrasonic welding horn was raised away from the web lap joint to a retracted position. The seam (lap joint) after welding had a thickness of about 220 micrometers. A splash (i.e. deposit of web material melted during welding) on each side of the welded belt adjacent to and adhering to each end of the web and to the region of the web underlying each splash at the seam was observed. The splash had a cross section similar to that illustrated in FIG. 7. Belts prepared by this welding technique were rapidly cycled to make copies in a test device containing a 3 roll belt support structure having at least one roll having a diameter of 19 mm and doctor blade cleaning system. The belts were periodically examined during cycling for any cracks formed by separation of the outer splash material from the web substrate. A belt was considered unacceptable when one or more separations of the outer splash material from the web substrate exceeded a total distance of 35 mm as measured along the length of the welded seam. It was found that the average number of hours of cycling to the point of unacceptability was about 80 hours.

EXAMPLE II

A web of polyester film (Mylar, available from E. I. duPont de Nemours and Co.) having a width of about 33.5 cm, a length of about 59 cm and a thickness of about 76 micrometers and having a first coating on one side of a polyester having a thickness of about 0.2 micrometer and a second coating comprising polyvinyl carbazole about 3 micrometers thick was coated on both sides with a layer comprising polycarbonate resin, each polycarbonate coating having a thickness of about 25 micrometers. This web was processed in an apparatus similar to the apparatus illustrated in the drawings. The leading edge of the web was placed on along the length of the upper surface of an anvil having a width of about 10 cm and a length of about 50 cm and held in place by a vacuum applied to apertures in the anvil underlying the leading edge of the web. The web covered slightly more than half of the upper surface of the anvil. The opposite edge of the web was brought under the anvil and placed on the exposed portion of the upper surface of the mandrel and over part of the leading edge of the web that was previously placed on the mandrel. The opposite edge overlapped the leading edge by about 0.9 mm. The opposite edge was held in place by a vacuum applied to apertures in the anvil underlying the opposite edge of the web. The anvil carrying the newly formed belt loop was then positioned under a reciprocateable ultrasonic welding horn. The ultrasonic welding horn supported in a carriage was lowered against the web lap joint. The horn was biased against the seam due to the controlled weight of about 4.5 to 5 kilograms of horn, transducer, bracket and any counterweight pressing against the seam supported by the mandrel. The horn was formed from 7075T6 aluminum alloy. The horn had a generally chisel shaped input horn welding surface in which the point of the chisel (similar to that illustrated in FIGS. 6A and 6B) was about 12 millimeters long, but flattened by lapping with 600 grit dry sandpaper to form a flat rectangular surface at the "point" having a width of about 0.5 mm and a length of about 12 millimeters. The horn was operated at a frequency of 40 kHz and a motion amplitude of about 60 - 75 micrometers and was driven by a Branson 40 kHz 4MB3 800 watt power supply with amplitude adjustment module VU-1, a Branson 40 Khz 2.0:1 booster aluminum 101-149-081, and a Branson 40 Khz converter 101-135-042. The horn was transported by the carriage in a substantially horizontal path along the web lap joint at a constant rate of about 37 millimeters per second. The carriage was driven by a worm gear which was in turn rotated by a belt connected to the shaft of an electric motor. During welding, the horn was allowed to freely move vertically to accommodate variations in the web lap joint thickness. During welding, the welding surface of the horn reciprocated through a distance of about 30 - 40 micrometers and the total distance between the welding surface of the reciprocating horn (from the midpoint of the stroke) and the surface of the underlying anvil was about 102 micrometers. This welding procedure caused the thermoplastic materials in the web to uniformly melt and weld the web seam. Upon completion of the welding of the belt lap joint, the ultrasonic welding horn was raised away from the web lap joint to a retracted position. The seam (lap joint) after welding had a thickness of about 220 micrometers. A splash (i.e. deposit of web material melted during welding) on each side of the welded belt adjacent to and adhering to each end of the web and to the region of the web underlying each splash at the seam was observed. The splash had a cross section similar to that illustrated in FIG 7. Belts prepared by this welding technique were rapidly cycled to make copies in a test device containing a 3 roll belt support structure having at least one roll having a diameter of 19 mm and doctor blade cleaning system identical to the test fixture described in Example I. The belts were periodically examined during cycling for any cracks formed by separation of the outer splash material from the web substrate. A belt was considered unacceptable when one or more separations of the outer splash material from the web substrate exceeded a total distance of 35 mm as measured along the length of the welded seam. It was found that the average number of hours of cycling to the point of unacceptability was about 220 hours. Thus the life of the belts prepared by the process of this invention was almost three times as long as that of the prior art control process described in Example I.

**Claims**

1. A process for welding sheet material ( 12) comprising a thermoplastic polymer, the process including the steps of overlapping edges (20, 22) of said sheet material to form a lap joint, and welding said lap joint by contacting and traversing said seam from one end to the other with an ultrasonic welding horn (18) which is oscillated at a frequency of between about 30 kHz and about 45 kHz.

2. A process for welding according to Claim 1, wherein said sheet material is a single sheet and said overlapping edges comprise a leading edge and trailing edge of said sheet whereby a belt loop is formed.

3. A process for welding according to Claim 1, wherein said sheet material comprises two sheets.

4. A process for welding according to any one of the preceding Claims, wherein said welding horn comprises aluminum or an alloy of aluminum.

5. A process for welding according to any one of the preceding Claims, wherein the oscillation amplitude of said welding horn is between about 50 micrometers and 150 micrometers, more specifically between about 60 micrometers and about 75 micrometers.

6. A process for welding according to any one of the preceding Claims, including traversing said lap joint with said welding horn at a traverse rate of between about 30 millimeters per second and about 70 millimeters per second, more specifically between about 45 millimeters per second and about 60 millimeters per second, and more specifically between about 50 millimeters per second and about 55 millimeters per second.

7. A process for welding according to any one of the preceding Claims, wherein the amount of overlap of said overlapping edges of said sheet material is between about 0.7 mm and about 1.7 mm.

8. A process for welding according to any one of the preceding Claims, wherein said sheet has a thickness between about 25 micrometers and about 500 micrometers.

9. A process for welding according to any one of the preceding Claims, including traversing said lap joint with said ultrasonic welding horn by establishing relative movement between said ultrasonic welding horn and said lap joint.

10. A process for welding according to any one of the preceding Claims, wherein said welding horn is oscillated at a frequency of between about 38 kHz and about 42 kHz while contacting and traversing said lap joint with said welding horn.

FIG. 1

**FIG. 2**

FIG. 3

**FIG. 4**

FIG. 5

**FIG. 6A**

**FIG. 6B**

**FIG. 7**

**FIG. 8**

EP 0 475 782 A1

European Patent Office

**EUROPEAN SEARCH REPORT**

Application Number

EP 91 30 8400

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-1 264 171 (THE DOW CHEMICAL COMPANY) <br> * the whole document * <br> --- | 1-10 | B29C65/08 <br> //B29L29:00 |
| X | FR-A-1 314 142 (INTERNATIONAL ULTRASONICS) <br> * the whole document * <br> --- | 1-10 | |
| X | US-A-3 904 474 (W.C. WASCO) <br> * column 3, line 2; figures * <br> --- | 1-10 | |
| X | US-A-4 750 970 (P.G. MALOSH) <br> * column 3, line 53; figures * <br> --- | 1-10 | |
| X | PATENT ABSTRACTS OF JAPAN <br> vol. 12, no. 190 (M-704)(3037) 3 June 1988 <br> & JP-A-62 297 138 ( TOYO SODA MFG CO LTD ) <br> 24 December 1987 <br> * abstract * <br> --- | 1-10 | |
| A | US-A-3 418 185 (L. BALAMUTH) <br> * column 6, line 29; claim 8; figure 1 * <br> ----- | 1-10 | TECHNICAL FIELDS SEARCHED (Int. Cl.5 ) <br><br> B29C |

The present search report has been drawn up for all claims

| Place of search | Date of completion of the search | Examiner |
|---|---|---|
| THE HAGUE | 29 NOVEMBER 1991 | CORDENIER J. |